# EUROPEAN PATENT APPLICATION

(11) **EP 3 804 517 A1**
(43) Date of publication of application: **14.04.2021**
(21) Application number: 20200863.7
(22) Date of filing: 08.10.2020
(51) Int. Cl.: A01M 9/00

(54) **PHYTOSANITARY TREATMENT**

(30) Priority: 08.10.2019 IT 201900018215
(71) Applicant: C.M.R. di Longon Antonio, 24040 Isso (BG) (IT)
(72) Inventor: LONGO, Antonio, 24040 Isso (BG) (IT)
(74) Representative: Branca, Emanuela

(57) **Abstract**

A phytosanitary treatment for a plant comprises one first phase which provides spraying hydrated lime in powder form over at least a surface of a plant.

## Description

The present invention relates to a phytosanitary treatment.

They are known in the state of the art phytosanitary treatments that use water-diluted hydrated lime which is distributed over a trunk of a plant by means of a brush in order to reduce the presence of insects on the trunk, where these insects are carriers of plant infesting bacteria.

Disadvantageously painting the leaves of the plant with water-diluted hydrated lime strongly reduces the plant transpiration and may cause serious problems to the leaves of the plant.

Disadvantageously the prior art phytosanitary treatments do not prevent an insect "Philaenus spumarius", otherwise called meadow spittlebug, from laying on the plant and do not prevent the plant from getting infected by a Gram-negative bacterium called "Xylella fastidiosa" which is carried by the spittlebug.

The object of the present invention consists in producing a phytosanitary treatment against insects carrying bacteria and against bacteria themselves, preferably against Gram-negative and preferably against "Xylella fastidiosa" bacteria.

According to the invention, such object is reached by a phytosanitary treatment according to claim 1.

Another object of the present invention consists in producing an apparatus for implementing a treatment against insects carrying bacteria and against bacteria themselves, preferably against Gram-negative bacteria and preferably against "Xylella fastidiosa" bacteria.

According to the invention, such other object is achieved by an apparatus according to claim 6.

Other features are comprised in the dependent claims.

The characteristics and the advantages of the present invention will become more evident from the following description, which is exemplary and not limiting.

The invention consists in a phytosanitary treatment against insects carrying bacteria or against bacteria themselves, preferably against Gram-negative bacteria, preferably against "Xylella fastidiosa" bacteria.

The phytosanitary treatment comprises a phase wherein the hydrated lime powder non-diluted in water, preferably powdered hydrated lime for food use, is sprayed in form of powder over an entire surface of a plant, where the surface of the plant comprises trunk and foliage.

Alternatively it is possible to provide spraying powdered super-ventilated hydrated lime.

It is further preferable to spray the hydrated lime powder also on the soil surrounding the trunk of the plant to be treated so as to reduce the presence of the spittlebug and contribute to prevent the bacterial infection. It is worth specifying that the soil surrounding the trunk of the plant must be cleaned from leaves and grass to contribute to the reduction of the spittlebug presence and thus contribute to avoid the bacterial infection.

The first phase of the phytosanitary treatment according to the present invention is implemented by means of an apparatus spraying hydrated lime in powder form.

The apparatus for spraying hydrated lime powder comprises an electric power generator, an air electric compressor which is a dispenser connected to the electric power generator, a sprayer for spraying hydrated lime in powder form connected to a container of hydrated lime in powder form and with the air electric compressor. Compressed air allows to spray the hydrated lime powder through the sprayer over the entire surface of the plant. Preferably the sprayer is gun-shaped to be more handy.

Alternatively the apparatus spraying hydrated lime powder comprises an alternative dispenser which is a screw pump connected to the electric power generator. The screw pump is connected to the container of hydrated lime powder and to the sprayer to spray the hydrated lime powder over the entire surface of the plant.

The phytosanitary treatment may comprise a second phase comprising a first step which provides making an aperture or a coring hole inside the trunk of the plant, a second step which provides introducing a probe comprising a camera or comprising a video camera to inspect the inside of the trunk of the plant. The second phase further provides a third step which provides spraying the hydrated lime powder directly inside the trunk of the plant where portions of the trunk damaged by bacteria are visible.

To implement the second phase of the phytosanitary treatment the powder sprayer apparatus also comprises a drill and a probe comprising a camera or a video camera.

The drill is an electrical drill connected to the electric power generator or alternatively connected to a drill electric battery.

The sprayer of hydrated lime powder is inserted in the aperture or into the coring hole made in the trunk of the plant and the hydrated lime powder is directly sprayed inside the aperture or coring hole where there is the trunk portion of the plant infested by bacteria.

In particular it is provided to spray the hydrated lime powder directly over the xylem vessels of the plant trunk that are infested by the "Xylella fastidiosa" bacterium to kill the bacterium.

For greater safety an operator using the apparatus spraying hydrated lime powder must wear goggles, an anti-dust mask, preferably an activated carbon anti-dust mask, a protective overalls, gloves and safety shoes.

It is specified that the hydrated lime must be in powder form both when picked-up by the sprayer apparatus, and in the phase of spraying the plant.

Advantageously the powdered hydrated lime, besides being a spittlebug repellent advantageously reduces the presence of moisture on the portions of the plant where it is sprayed creating at the same time a basic environment which is advantageously harmful for Gram-negative bacteria in particular it is considered advantageously harmful for the Xylella fastidiosa bacterium.

Preferably hydrated lime powder for food use is used so that it can be sprayed also directly on the fruit of fruit trees for greater food safety.

Preferably super-ventilated hydrated lime powder is used such to have a constant powder grain size which allows a greater spraying efficacy on the plant surface.

Advantageously the phytosanitary treatment according to the present invention allows both preventing and fighting infestation by Xylella fastidiosa bacterium over olive trees having a repellent effect against spittlebug, and having a harmful effect for the bacterium once applied on the sick portions inside the plant trunk or over the entire plant surface.

Advantageously hydrated lime pigmented in any colour such as the colour of the crown or trunk of the plant may also be used to reduce the environmental and appearance impact.

Advantageously the phytosanitary treatment according to the present invention may be applied over any type of plant, also fruit tree such to prevent and fight bacterial infestations.

Advantageously the hydrated lime powder allows the plant to breathe, in particular it allows the plant leaves to breathe without being ruined by the hydrated lime in powder form.

The first phase in the phytosanitary treatment which provides spraying the plant surface with hydrated lime powder may be implemented alone even without the second treatment phase.

The first phase of the phytosanitary treatment allows to prevent the onset of the bacterial infestation of the plant.

The first phase of the phytosanitary treatment may alternatively provide spraying only some portions of the plant which are particularly exposed to the bacterium, even though it is advisable to spray the entire plant surface to ensure an efficient prevention against the plant bacterial infestation.

Preferably the first phase of the phytosanitary treatment must be repeated at least 2 or 3 times a year to ensure an efficient prevention from bacterial infestations.

The invention thus conceived is susceptible to many modifications and variants, all falling within the same inventive concept; furthermore, all details can be replaced by equivalent technical elements. In practice, the materials used, as well as the dimensions thereof, can be of any type according to the technical requirements.

## Claims

1. A phytosanitary treatment for a plant comprises one first phase which provides spraying hydrated lime in powder form over at least one surface of a plant.

2. The phytosanitary treatment according to claim 1, **characterized in that** the hydrated lime powder is hydrated lime for food use.

3. The phytosanitary treatment according to any one of claims 1 or 2, **characterized in that** the hydrated lime powder is super-ventilated hydrated lime.

4. The phytosanitary treatment according to any one of claims 1-3, **characterized in that** said first phase provides spraying hydrated lime in powder form over an entire surface of said plant from a plant trunk to a plant foliage.

5. The phytosanitary treatment according to any one of claims 1-4, **characterized in that** it comprises one second phase which comprises one first step which provides making an aperture inside the plant trunk, one second step which provides introducing a probe comprising a camera or comprising a video camera to inspect the aperture inside the plant trunk, one third step which provides spraying the hydrated lime powder over portions of the aperture inside the plant trunk.

6. An apparatus to implement a phytosanitary treatment according to any one of claims 1-5, **characterized in that** it comprises an electric power generator, a dispenser connected to the electric power generator, a sprayer for spraying hydrated lime in powder form connected to a container of hydrated lime in powder form and to the dispenser.

7. The apparatus according to claim 6, **characterized in that** said dispenser is an electric air compressor.

8. The apparatus according to claim 6, **characterized in that** the dispenser is a connected screw pump.

9. The apparatus according to any one of claims 6-8, **characterized in that** the sprayer is a dispensing gun for spraying hydrated lime powder.

10. The apparatus according to any one of claims 6-9, **characterized in that** it comprises a drill for making an aperture into the plant trunk and a probe comprising a camera or video camera for inspecting the aperture inside the plant trunk.
